Europäisches Patentamt

European Patent Office

Office européen des brevets

(11) Publication number: **0 489 073 B1**

# EUROPEAN PATENT SPECIFICATION

(45) Date of publication of patent specification: **25.01.95**  (51) Int. Cl.[6]: **B01D 53/32**, B01J 19/08

(21) Application number: **90912806.8**

(22) Date of filing: **23.08.90**

(86) International application number:
**PCT/GB90/01314**

(87) International publication number:
**WO 91/02581 (07.03.91 91/06)**

(54) **APPARATUS AND METHOD FOR TREATMENT OF GAS.**

(30) Priority: **25.08.89 GB 8919440**

(43) Date of publication of application:
**10.06.92 Bulletin 92/24**

(45) Publication of the grant of the patent:
**25.01.95 Bulletin 95/04**

(84) Designated Contracting States:
**AT BE CH DE DK ES FR GB IT LI LU NL SE**

(56) References cited:
**EP-A- 0 212 379**
**US-A- 4 650 555**

(73) Proprietor: **ADVANCED ENERGY SYSTEMS (MARKETING) LIMITED**
**14 Atholl Street**
**Douglas,**
**Isle of Man (GB)**

(72) Inventor: **WILLIS, James David**
**13 Southern Way**
**Letchworth,**
**Herts. SG6 4TD (GB)**

(74) Representative: **Johnson, Terence Leslie et al**
**Edward Evans & Co.**
**Chancery House**
**53-64 Chancery Lane**
**London WC2A 1SD (GB)**

EP 0 489 073 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

The present invention relates to a method and apparatus for treatment of gas, particularly gaseous streams or flows.

The efficient destruction of gas and vapour molecules of pollutant compounds and the efficient destruction of air-borne bacteria are of major importance to the populace and the environment.

For example, plant and equipment which rely upon a combustion process for operation will, as a consequence of that combustion process, emit both gaseous and vapour phase compounds from or through an exhaust system, usually to atmosphere. Many if not all of these emitted compounds are known to be harmful to the health of the populace and damaging to the environment. As a further example, motor vehicles emit compounds in gaseous and vapour form from their exhaust systems which contain such compounds as oxides of carbon, oxides of nitrogen and short chain and long chain hydrocarbons, in both gas and vapour forms. Such compounds are harmful both to the health of the populace and to the environment in general.

Existing gas treatment methods have many drawbacks, for example, the formation of reactor slurries which require disposal. In U.S.-A-4 650 555, a process for removing pollutants including sulphur dioxide and/or nitrogen oxides from effluent gases is described which, although utilising corona discharges as an enhancing step, employs techniques such as addition of alkaline substances for neutralisation. In EP-A-0 212 379, the use of electrically conductive fibres for use in uniformly ionising gases in a combustion plant is described.

It is accordingly an object of the invention to seek to mitigate these disadvantages.

According to a first aspect of the invention there is provided a method of treating a gas to remove gaseous contaminants therefrom comprising the steps of:

a) Imparting a high direct current voltage to a gas sufficient to destabilise the gas;

b) Ionising the gas; and

c) Applying a high frequency A.C. or pulsed D.C. high voltage force field to the gas,

whereby to convert constituents having a relatively complex molecular structure to a simpler structure.

According to a second aspect of the invention there is provided apparatus for carrying out the said method comprising a first device for imparting a direct current voltage to the gas sufficient to destabilise the gas, a second device to ionise the gas being downstream of the first device and, downstream of the second device, a third device adapted to apply an electrical pulsed force field to the gas, the arrangement being such that the devices are so disposed that a gas to be treated flows sequentially through the apparatus from upstream of the first device to downstream of the third device whereby to convert constituents having a relatively complex molecular structure to a relatively simpler structure.

The devices may be housed in a tubular housing having an inlet for gas upstream of the third device and an outlet for gas downstream of the second device.

The inlet and outlet may be respectively adapted for connection in a conduit through which the gas flows in use.

The inlet may be adapted for connection to a conduit through which the gas flows in use.

There may be means for admittance of air or oxygen to the gas, preferably intermediate the inlet and the third device.

The means may comprise a pipe projecting through the wall of the housing.

The device for imparting a direct voltage to the gas may comprise a grid of substantially parallel spaced apart elongate electrical elements extending in a direction transverse to the longitudinal axis of the housing.

The elements may comprise wires mounted in an electrically conductive holder inserted in the housing and electrically insulated therefrom by insulation means so that the wires may extend substantially across the internal cross-section of the housing, and there may be an electrical connection to an electrical source externally of the housing.

The holder may comprise two spaced apart metal strips between which the wires extend.

The device adapted to apply an electrical force field to the gas may comprise a plurality of spaced apart electrically conductive plate elements which may be substantially planar, mounted so as to lie in planes substantially parallel to the longitudinal axis of the housing.

Adjacent plate elements may be spaced apart by electrically insulated spaces whereby the spaces between each pair of plate elements may be substantially identical.

Alternate plate elements may be electrically connected with a respective common electrical conductor whereby to provide two banks of plate elements, and each conductor may be adapted for connection with an electrical circuit externally of the housing.

2

The device adapted to apply an electrical force field to the gas may comprise an insert in the housing, and there may be means to insulate the insert electrically from the housing, the insert containing electrically conductive material; the insert may have a respective inlet and outlet for gas.

The insert may comprise an electrically conductive tube substantially coaxial with the housing.

The electrode may pass internally through the insert in a direction substantially parallel to the longitudinal axis of the housing.

The electrode may be coaxial with the housing and insert and the material may substantially completely fill the insert surrounding the electrode and may suitably comprise a plurality of discrete electrically conductive members.

The members may be irregularly shaped metal granules.

The respective inlet and outlet may comprise a perforated screen supporting the electrode in position in the insert and maintaining the granules in the insert.

The insert and electrode may be connected with respective electrodes adapted for connection with an electrical circuit externally of the housing.

The electrical circuit may be adapted to generate a high frequency A.C. voltage as a range from 100 Hertz to 100 megaHertz.

The electrical circuit is adapted to generate a pulsed D.C. high current voltage.

The voltage may be between 500 and 50,000 volts.

Apparatus and method embodying the invention are hereinafter described, by way of example, with reference to the accompanying drawings.

Fig.1 shows schematically a longitudinal sectional view of one embodiment of apparatus according to the present invention;

Fig.2 shows in diagrammatic perspective view to an enlarged scale, a destabiliser unit used in the apparatus of Fig. 1;

Fig.3 shows in diagrammatic perspective view to a larger scale an ionisation grid used in the apparatus of Fig. 1;

Fig.4 shows in diagrammatic perspective view to an enlarged scale an electric field applicator or generator used in the apparatus of Fig. 1; and

Fig. 5 shows schematically in longitudinal sectional view a second embodiment of apparatus according to the invention.

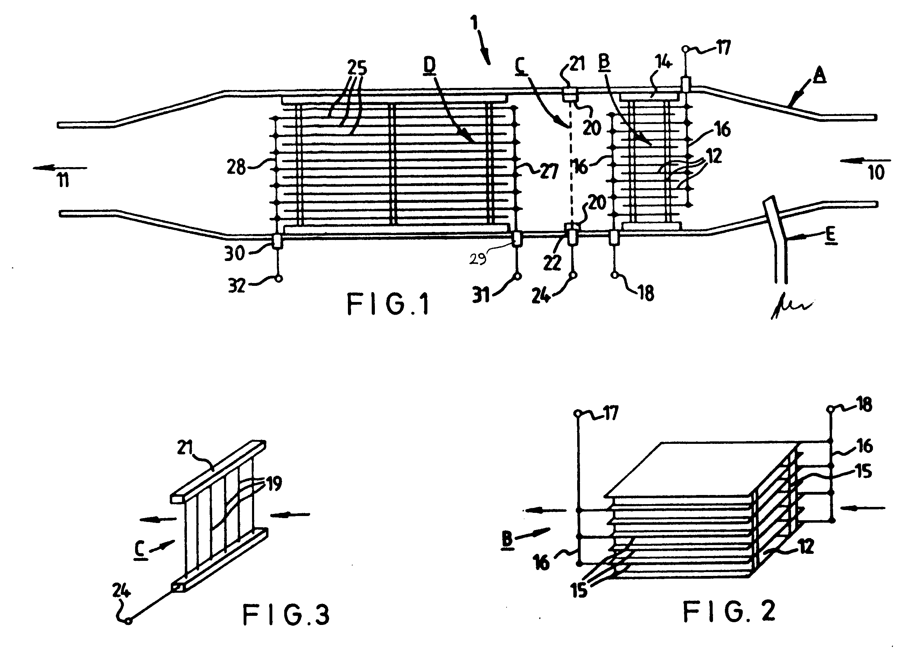

Referring to the drawings, Fig. 1 shows apparatus 1 including a housing A comprising a tube, having an inlet opening 10 and an outlet opening 11 located at its respective ends. The housing A contains separate units for subjecting a gas or gaseous strew to a three stage process comprising a destabiliser unit B, an ionisation unit C and a field applicator unit D. The housing A comprises a tubular structure and is designed to be incorporated in a duct along which the gaseous stream to be treated is passed. The housing A has its inlet opening 10 attached to the duct (not shown) and its outlet opening 11 is attached to the continuation of the duct, which thus extends from right to left as shown in Fig. 1.

The housing A can have a greater cross-section that the duct and the openings 10 and 11, as shown, in order to accommodate the units B, C and D. The housing A is typically made of an inert metal, such as steel, or any other rigid constructional material which will not affect nor be affected by the gaseous stream, in operation. At the vicinity of the inlet opening 10, the housing A, is provided, upstream of the location of the destabiliser B, with a further inlet opening fitted with a metal tube E. This tube E is coupled to an electrically operated air blower (not shown) and serves to deliver a supply of ambient air continuously to the main inlet opening 10. This enables air to be added as required to the gaseous stream, as it enters the housing A.

The units B, C and D are located along the length of the housing A approximately in the locations shown. A contaminated air or other gaseous stream thus enters the system through the inlet opening 10 and mixes with the ambient air delivered through the inlet tube E. The gas flow then passes in turn through the destabiliser B, the ionisation unit C and then through the field applicator unit D, finally passing out of the housing A through the outlet opening 11.

Referring now to Fig. 2, the destabiliser device B comprises two or more metallic electrodes 12, each in the form of plates, either fully coated with an electrical insulator, or in the form of exposed bare metal, which are mounted in parallel within an electrically-insulated duct 14. The electrode plates 12 are separated from one another by electrically-insulating separators 15, so that space is formed between adjacent plates 12, through which the gas or air can freely pass. Alternate ones of the plates 12 are connected together electrically, by means of conductors 16, to form two separate electrode assemblies. The conductors 16 connected to each electrode assembly are themselves taken to terminal points 17 and 18 external to the housing A. In turn, these terminal points 17 and 18 are connected to an electrical circuit (not shown) which is designed to produce a high direct current voltage, typically in the range from 500 to 50,000 volts. By this means, the gaseous stream passing through the housing A is subjected to the electrical discharge produced between the electrode plate assemblies, when the D.C. voltage is applied.

Referring now to Fig. 3, the ionisation device C comprises a grid 19 constructed in the form of a number of parallel wires, mounted in the horizontal or vertical plate between two metal strips 20. The strips 20 are located in the interior of a duct 21 in the housing A and the grid 19 attached between them is thus mounted within the duct 21, which is eletrically-insulated at 22 and connected electrically to a terminal point 34, external to the housing A.

In turn, the terminal point 24 is connected to a further electrical circuit (not shown) designed to deliver a high direct current voltage to the grid 19, typically between 500 and 50,000 volts.

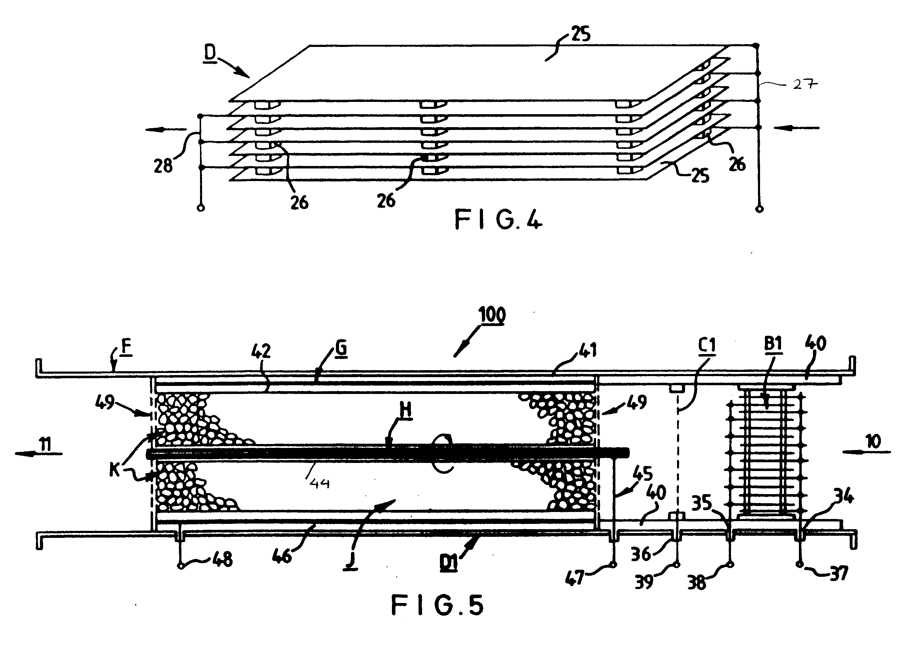

Referring now to Fig. 4, the field applicator device D comprises two or more metallic plates 25 mounted parallel to one another in the horizontal plane, i.e. parallel to the long axis of the housing A. Electrically-insulating spaces or separators 26 are fitted between the plates at either side of the duct formed by the housing A, to form continuous air gaps 28, between adjacent plates. The plates 25 are stacked in the vertical plane, so that the stack of plates effectively fills the cross-section of the tubular housing A. Each alternate plate is electrically connected together by means of a conductor 27, to form one of two electrically separated banks of plates. The other plates are similarly connected by a conductor 28 to fors the other bank of plates.

A connection 29 and 30 is made to each bank of plates and taken to terminal points 31 and 32, external to the housing A (Fig. 1). The terminals 31 and 32 are in turn connected to an external circuit (not shown), designed to generate a high frequency A.C. or pulsed D.C. high voltage current, typically of between 500 and 50,000 volts at a desired frequency in the range from 100 Hertz to 100 megaHertz.

In use of the apparatus according to the invention in Figs. 1 to 4, operation typically takes place according to the following method.

A gaseous stream to be treated, e.g. for the removal of substances which could cause pollution or for the destruction of bacteria or other undesirable micro-organisms, e.g. a mixture of compounds in gas and vapour form or contaminated air, enters the housing A through the inlet opening 10 and mixes in a predetermined ratio, with ambient air entering through the tube E. The air added to the gaseous stream by way of the inlet tube E supplies oxygen to support combustion and other oxidation reactions in the housing A and also results in the formation of atomic oxygen and oxygen ions, which participate in several of the reactions which take place in the apparatus.

In a similar manner, the air supply provides nitrogen in molecular form and this leads to the production of atomic nitrogen and nitrogen ions which participate in a variety of reactions with components of the gaseous stream or the products obtained from them as one or more of the destabilisation, ionisation and field application steps is or are carried out. The mixed gas stream so formed, passes through the destabiliser B, where it is subjected to an electrical discharge. This causes the gas, vapour and air molecules to become unstable.

It is believed that atoms constituting these molecules become excited and, therefore, their internal energy levels rise causing their electrons to occupy higher orbits. As a result, the bonds between the atoms become weaker, resulting in a reduction in the structural stability of the molecules which they form.

The destabilised gas stream now passes through the ionisation device C, where it is subjected to a high positive or negative electrical charge, causing the already weakened bonds to sever. This is believed to occur because the charge imparted to the flow strips electrons from the constituent atoms, leaving the nucleus of such atoms with a net positive charge, thus becoming ions. A positive or negative charge will result in the production of negative or positive ions respectively.

After passing through the ionisation device C, the majority of the molecules which constituted the initial gas flow will have been broken down to simpler molecules or will have dissociated into free radicals having high internal energy levels. The gas flow now enters the field applicator D, where it is exposed to a high frequency A.C. or pulsed D.C. high voltage force field generated between the plates 25, of the applicator. This force field depending on the tuning of the device D effectively synchronises with the resonant frequencies of particular bonded molecules which contain only elements, especially nitrogen and oxygen, which are included with other molecular species, e.g. simple organic compounds in the gas stream after it has undergone the first two treatment steps.

The force field further dissociates such elemental molecules to form further free atoms in a highly excited state. The consequence of this treatment is that all atomic, molecular and compound species present in the gas stream are brought momentarily to a high state of internal energy, but with a charge on the nucleus of each atom or ion consistent with its mass and normal electron complement.

4

On passing through and leaving the force field, all components of the gas stream lose energy to the field rapidly and immediately fall to low energy levels. As a result, many of these components combine with similar molecular fragments to form simple molecules, rather than compound molecules. In the case of bacteria and other micro-organisms present in the gas stream, the high voltage high frequency field destroys their cell structure, as a result of which they are rendered harmless or at least less harmful. The whole operation over the three states is completed within the time period between the gas flow entering and leaving housing A of the device. The method can be operated at high flow velocities, typically up to 50 metres per second.

Referring now to Fig. 5, the apparatus 100 shows an embodiment which uses an open-ended cylinder F of appropriate length and internal diameter. Placed inside one end of the cylinder F is a destabiliser B1, followed by an ionisation device C1, similar to Figs. 1-4. Connections 34, 35 and 36 are again taken to terminal points 37, 38 and 39 external to the cylinder F.

As shown in Fig. 5, the destabiliser unit B1 consists of a stack of spaced plate electrodes 12, each alternate one being connected to one or other of two conductors 16 and held in place by insulated separators 15. The conductors 16 are connected to the respective connections 34, 35 which pass in an insulated manner through the wall of the housing formed by the cylinder F, e.g. of steel, to the respective terminals 37, 38. Similarly, the grid of the ioniser C1 is connected by the connection 36, through the cylinder wall to the terminal 39.

A layer or tube of insulation material 40 lines the interior of the cylinder F in the region occupied by the units B1 and C1. Omitted from Fig. 5 for simplicity, is an ambient air inlet tube, similar to tube E, (Fig. 1), which can alternatively be connected to the duct conveying the gaseous stream at a point upstream of the inlet end of the cylinder F. This air inlet tube serves the same purpose as the tube E, described in relation to Fig. 1. Beyond the ionisation device C1, in the downstream direction of the length of the cylinder F, a further tube or cylinder G is provided and is electrically insulated from the first cylinder F by means of an insulating lining 41 or encasement. The tube G is made of a metal e.g. steel, and forms one electrode of the field applicator F. Inside the second cylinder or electrode G is a further cylindrical lining 42, constructed from electrically insulating material, thus enclosing the outer electrode G, within an electrically-insulated shell.

Extending along the central axis common to the main cylinder F and the encased electrode G, is a further electrode H, again encased in an electrically-insulating material 44. Thus, an electrically-insulated cavity j of annular cross-section is formed, along the length of the region of the cylinder F downstream of the region housing the units B1 and C1. Each electrode G and H is electrically connected by conductors 45 and 47 to terminal points 47 and 48, external to the cylinder F.

At each end of the insulated cavity J an electrically-insulated perforated panel 49 is located, through which gas and vapour can pass readily, the cavity J being filled wholly with material such as granules K of a substance which conducts electricity. Such granules can be simple metallic granules, or compound granules containing various metals impregnated upon an inert base material such as ceramic substrate. This cavity J with the granular filling K comprises the field applicator unit D1 in this embodiment.

Operation of the embodiment shown in Fig. 5 is substantially similar to that described in relation to the first embodiment of Figs 1 to 4, except for the field applicator, an electric field is generated between the two electrodes G and H, which are fully insulated electrically from the granular filling K. As the granular filling K is an electrical conductor, induced charges appear throughout the granules K, giving rise to an intensification, due to the substantial surface area presented by the granules, of the force field applied to the incoming gas flow.

The results of a series of tests on apparatus using the invention including a car exhausts are shown in the following Table:

| RUN | MEAN NOx IN (PPM) | MEAN NOx OUT (PPM) | % NOx REDUCTION | FREQ Hz |
|---|---|---|---|---|
| 1 | 202.8 | 146.3 | 27.8 | 200 |
| 2 | 201 | 136 | 32.3 | 200 |
| CAR EXHAUST TRIALS | | | | |
| 3 | 22 | 0 | 100 | JETTA |
| 4 | 15 | 0 | 100 | JETTA |
| 5 | 60 | 0 | 100 | CARLTON |
| 6 | 111.6 | 70.4 | 36.8 | 200 |
| 7 | 69 | 25 | 63 | 200 |
| 8 | 55 | 0 | 100 | 200 |

It can be seen from the Table that harmful oxides of nitrogen (NOx) are reduced significantly, at a frequency of the field application of 200 Hertz.

By using the invention and its technology in either of the two embodiments of apparatus described, selected compound molecules in the gas stream are broken down to constituent elements which, by operation of the same apparatus, re-combine to form simple and elemental molecules. Such compound molecules may be in the form of oxides of carbon, oxides of nitrogen, oxides of sulphur, gaseous and vapour phase hydrocarbons and other pollutants, such as P.C.Bs. The simpler and elemental molecules which result from processes using the apparatus described, include nitrogen, oxygen, water vapour, carbon solids, sulphur solids and other gases in pure elemental forms as may be present in P.C.B. molecules initially.

The technology of the invention, making use of the apparatus described, can be used in effect, to catalyse or promote gas and vapour phase reactions at normal temperature and pressure, which would otherwise require to be initiated by specific catalysts at various generally elevated temperatures and pressures.

Moreover, in both embodiments, the electrical inputs to the respective units B, B1, C, C1, D, D1 can be adjusted to specific parameter, i.e. the apparatus can in effect be "tuned", so that gas and vapour phase reactions can be controlled, so as to give end products which hitherto, have only been achievable using specific catalysts at elevated temperatures and pressures.

Stated in another way, the gas stream is first destabilised at B,B1. Downstream, at C,C1 the gas is ionised by a grid of electrodes and, further downstream, a high D.C. voltage is applied to achieve field application.

The apparatus and method embodying the invention rely on the fact that molecules in the gas and vapour states absorb high frequency electromagnetic radiation at different wavelength dependent upon their atomic structure. Compound molecules (molecules with dissimilar atoms) such as CO, $CO_2$, NOx, $CH_4$ and low molecular weight hydrocarbons, absorb radiation at wavelengths between 2 and 15 micrometers (Infrared part of the spectrum).

The absorption of energy by gas and vapour molecules at these wavelengths, is used as the means to convert compound molecules to elemental molecules electronically, rather than by catalytic conversion. Stated in another way, compound molecules are dissociated to free atoms which then re-combine to form simple elemental molecules as radical products of dissociation seek the lowest energy level on recombination to form stable elemental molecules.

This is achieved by exposing a gas stream containing compound molecules, to high frequency radiation within an electric force field. If the energy content of the radiation is of a certain magnitude, the compound molecules can be made to absorb excess energy from the electric force field, sufficient to cause complete molecular dissociation and the production of free atoms with a net positive charge.

When these free atoms attempt to gain electrons and thus become neutral, they do so by associating with other free atoms to share electrons through common bonds. If this is made to occur under low energy level conditions, then most atoms will associate with similar atoms rather than with dissimilar atoms and form simple elemental molecules in preference to compound molecules. Thus contaminants in a gas are eliminated in the invented apparatus.

6

The apparatus of the invention and the treatment methods based upon use of such apparatus can apply to a wide range of different purposes, which can serve in a variety of ways to improve the environment in which the apparatus is used, to restore the environment to an improved state after pollution or even to minimise or substantially prevent environmental pollution from otherwise occurring.

Thus, as disclosed in the foregoing, the invention includes a method and apparatus for breaking down the molecular structure of selected compounds in the gas and vapour states, for the purpose of reducing or even eliminating harmful compounds from gaseous streams. A further purpose of this aspect of the invention is the formation, from the resultant molecular fragments, of different compounds which are environmentally more acceptable or desirable for other reasons. The present invention additionally includes improved methods of gas and vapour phase catalysis and, furthermore, improved methods of destroying air-borne bacteria, together with various forms of apparatus to enable these methods to be carried out.

In particular, the invention is concerned with apparatus designed to employ technology by which electrical energy and electric fields are used to break down the molecules of relatively complex compounds, in gas and vapour form and then derive from the resultant products and the constituent atoms, compounds having a more simple molecular structure.

Such molecules only contain elements which are not harmful and are abundantly present at the earth's surface in the natural world, such as oxygen, nitrogen and carbon, as well as water, none of which pose any threat to the human, animal or vegetable kingdoms.

An example has been given of potential risk in the case of airborne bacteria by which atmospheric air in movement is used for heating, cooling or ventilation systems. Bacteria can concentrate and accumulate in the duct arrangements typically present in such systems and so become a hazard to persons exposed to the air in which such bacteria are carried. Apparatus embodying the invention as hereinbefore described with reference to the drawings, can be used to destroy or substantially reduce the bacteria concentrations and thereby reduce the hazard to persons exposed to the air. Such apparatus can be constructed relatively easily and simply and also can be readily installed in duct systems of the kinds mentioned.

Thus it can be seen from the foregoing that a treatment for gaseous streams is described whereby depending upon the particular end result required, a gaseous stream is subjected to an electric force field, whereby molecular species present in the gaseous stream, in the gas or vapour state, undergo destabilisation and whereby bacteria or other micro-organisms present in the gaseous stream undergo destruction. Compound gas and vapour molecules are broken down by further exposing them to a sequence of an electrical discharge and an electric force field, within an integrated system.

**Claims**

1. A method of treating a gas to remove gaseous contaminants therefrom comprising the steps of:
   a) Imparting a high direct current voltage to a gas sufficient to destabilise the gas;
   b) Ionising the gas; and
   c) Applying a high frequency A.C. or pulsed D.C. high voltage force field to the gas,
   whereby to convert constituents having a relatively complex molecular structure to a simpler structure.

2. Apparatus (1,100) for carrying out the method of Claim 1, comprising a first device (B, B1) for imparting a direct current voltage to the gas sufficient to destabilise the gas, a second device (C, C1) to ionise the gas being downstream of the first device (B, B1), and, downstream of the second device (C, C1), a third device (D, D1) adapted to apply an electrical pulsed force field to the gas.

3. Apparatus according to Claim 2, characterised by the devices (B, B1 C,C1 D,D1) being housed in a tubular housing (A, F) having an inlet (10) for gas upstream of the device (B, B1) and an outlet (11) for gas downstream of the device (D, D1).

4. Apparatus according to Claim 2, characterised by the inlet (10) and outlet (11) being respectively adapted for connection in a conduit through which the gas flows in use.

5. Apparatus according to Claim 2, characterised by the inlet (10) being adapted for connection to a conduit through which the gas flows in use.

6. Apparatus according to Claims 2 to 5, characterised by means (E) for admittance of air or oxygen to the gas.

7. Apparatus according to Claim 6, characterised by means (E) comprising a pipe projecting through the wall of the housing (A, F).

8. Apparatus according to any of Claims 2 to 7, characterised by the device (C, C1) comprising a grid (19) of substantially parallel spaced apart elongate electrical elements (21) extending in a direction transverse to the longitudinal axis of the housing (A, F).

9. Apparatus according to Claim 8, characterised by the elements (19) comprising wires mounted in an electrically conductive holder (20) inserted in the housing (A, F) and electrically insulated therefrom by insulation means (22) so that the wires (19) extend substantially across the internal cross-section of the housing (A, F), and by an electrical connection (24) to an electrical source externally of the housing (A, F).

10. Apparatus according to Claim 9, characterised by the holder (20) comprising two spaced apart metal strips between which the wires extend.

11. Apparatus according to any of Claims 7 to 10, characterised by the device (D) comprising a plurality of spaced apart electrically conductive plate elements (25) mounted so as to lie in planes substantially parallel to the longitudinal axis of the housing (A).

12. Apparatus according to Claim 11, characterised by the plate elements (25) being substantially planar.

13. Apparatus according to Claim 11 or Claim 12, characterised by adjacent plate elements (25) being spaced apart by electrically insulated spaces (26) whereby the spaces between each pair of plate elements is substantially identical.

14. Apparatus according to Claim 13, characterised by alternate plate elements (25) being electrically connected with a respective common electrical conductor (27, 28) whereby to provide two banks of plates and by each conductor (27, 28) being adapted at (31, 32) for connection with an electrical circuit of the housing.

15. Apparatus according to any of Claims 7 to 10, characterised by the device (D1) comprising an insert (G) in the housing (F), by there being means (41) to insulate the insert (G) electrically from the housing (F), by the insert (G) containing electrically conductive material (K), and by the insert (G) having a respective inlet and outlet (49) for gas.

16. Apparatus according to Claim 15, characterised by the insert (G) comprising an electrically conductive tube substantially coaxial with the housing (F).

17. Apparatus according to Claim 16, characterised by an electrode (H) passing internally through the insert (G), in a direction substantially parallel to the longitudinal axis of the housing (F).

18. Apparatus according to Claim 16 or Claim 17, characterised by the electrode (H) being coaxial with the housing (F) and insert (G) and by the material (K) substantially completely filling the insert (G) surrounding the electrode (H) and comprising a plurality of discrete electrically conductive members.

19. Apparatus according to Claim 18, characterised by the members (K) being irregularly shaped metal granules.

20. Apparatus according to Claim 19, characterised by the respective inlet and outlet (49) comprising a perforated screen supporting the electrode (H) in position in the insert (G) and maintaining the granules (K) in the insert (G).

21. Apparatus according to Claim 10, characterised by the insert (G) and electrode (H) being connected with respective electrodes (48, 47) adapted for connection with an electrical circuit externally of the housing.

EP 0 489 073 B1

**22.** Apparatus according to Claim 14 or Claim 21, characterised by the electrical circuit being adapted to generate a high frequency A.C. voltage as a range from 100 Hertz to 100 megaHertz.

**23.** Apparatus according to Claim 14 or Claim 21, characterised by the electrical circuit being adapted to generate a pulsed D.C. high voltage.

**24.** Apparatus according to Claim 22 or Claim 23, characterised by the voltage being between 500 and 50,000 volts.

**Patentansprüche**

**1.** Gasbehandlungsmethode, um darans gasförmige Verunreinigungen zu entfernen, die folgende Schritte einbegreift :
a) ein Gas einer genügend hohen Gleichspannung aussetzen, um das Gas zu destabilisieren;
b) das Gas ionisieren; und
c) das Gas einem Hochfrequenzwechselspannung- oder pulsiertem Gleichspannungsstärkefeld unterwerfen, um so Komponenten mit einer relativ komplexen molekularen Struktur in eine einfachere Struktur umzuwandeln.

**2.** Apparat (1, 100) um die Methode des Anspruchs 1 auszuführen, der aus einem ersten Gerät (B, B1) um das Gas einer Gleichstromspannung auszusetzen, welche genügend ist, um das Gas zu destabilisieren, aus einem zweiten Gerät (C, C1), abwärts des ersten Gerätes (B, B1), um das Gas zu ionisieren, und, abwärts des zweiten Gerätes (C, C1) aus einem dritten Gerät (D, D1) um das Gas einem elektrischen pulsierenden Stärkefeld zu unterwerfen, besteht.

**3.** Apparat gemäss Anspruch 2, dadurch gekennzeichnet, dass die Geräte (B, B1, C, C1, D, D1) in einem rohrförmigen Gehäuse (A, F) mit einem Gaseinlass (10), stromaurwärts des Gerätes (B, B1), und einem Gasabfluss (11), stromabwärts des Gerätes (D, D1), untergebracht sind.

**4.** Apparat gemäss Anspruch 2, dadurch gekennzeichnet, dass der Einlass (10) und der Abfluss (11) jeweils zum Anschluss in einer Leitung, durch welche das Gas bei seiner Verwendung fliesst, angepasst sind.

**5.** Apparat gemäss Anspruch 2, dadurch gekennzeichnet, dass der Einlass (10) Um Anschluss mit einer Leitung, durch welche das Gas während der Verwendung fliesst, angepasst ist.

**6.** Apparat gemäss den Ansprüchen 2 bis 5, gekennzeichnet durch Mittel (E) für die Zufuhr von Luft der Sauerstoff zu dem Gas.

**7.** Apparat gemäss Anspruch 6, gekennzeichnet durch Mittel (E), welche eine Röhre, die die Wand des Gehäuses (A, F) durchdringt, einbegreifen.

**8.** Apparat gemäss irgend einem der Ansprüche 2 bis 7, dadurch gekennzeichnet, dass das Gerät (C, C1) ein Gitter (19) mit wesentlichen parallelen, in Abstand gelagerten, länglichen elektrischen Elementen (22), die sich in einer Richtung quer zur Längsachse des Gehäuses (A, F) erstrecken, besitzt.

**9.** Apparat gemäss Anspruch 8, dadurch gekennzeichnet, dass die Elemente (19) Drähte aufweisen, die in einem elektrisch leitenden Halter (20) montiert sind, welcher in dem Gehäuse (A, F) eingefügt und davonr elektrisch durch Isoliermittel (22) isoliert ist, so dass die Drähte (19) sich wesentlich über die innere Schnittfläche des Gehäuses (A, F) erstrecken, mit einer elektrischen Verbindung (24) zu einer Stromquelle ausserhalb des Gehäuses (A, F).

**10.** Apparat gemäss Anspruch 9, dadurch gekennzeichnet, dass der Halter (20) zwei voneinander getrennte Metallbänder besitzt, zwischen denen die Drähte sich erstrecken.

**11.** Apparat gemäss irgend einem der Ansprüche 7 bis 10, dadurch gekennzeichnet, dass das Gerät (D) eine Mehrzahl von auseinander gelagerten, elektrisch leitenden Plattenelementen (25) aufweist, die so montiert sind, dass sie in Flächen, die wesentlich parallel zu der Längsachse des Gehäuses (A) sind,

9

liegen.

12. Apparat gemäss Anspruch 11, dadurch gekennzeichnet, dass die Plattenelemente (25) wesentlich flach sind.

13. Apparat gemäss Anspruch 11 oder Anspruch 12, dadurch gekennzeichnet, dass nebeneinander liegende Plattenelements (25) durch elektrisch isolierte Räume (26) getrennt sind, in solcher Weise, dass die Räume zwischen jedem Paar Plattenelemente im wesentlichen identisch sind.

14. Apparat gemäss Anspruch 13, gekennzeichnet durch abwechselnde Plattenelemente (25), jeweils mit einem gemeinsamen elektrischen Leiter (27, 28) elektrisch verbunden, um in solcher Weise zwei Plattenreihen zu bilden, wobei jeder Leiter (27, 28) bei (31, 32) angepasst ist, um mit einer elektrischen Schaltung des Gehäuses verbunden zu werden.

15. Apparat gemäss irgend einem der Ansprüche 7 bis 10, dadurch gekennzeichnet, dass das Gerät (D1) einen Einsatz (G) in dem Gehäuse (F) besitzt, welcher Mittel (41) aufweist um den Einsatz (G) elektrisch von dem Gehäuse (F) zu isolieren, dass der Einsatz (G) ein elektrisch leitendes Material (K) enthält, und dass der Einsatz (G) jeweils einen Einlass und einen Abfluss (49) für das Gas besitzt.

16. Apparat gemäss Anspruch 15, gekennzeichnet durch einen Einsatz (G), mit einer elektrisch leitenden Röhre, welche im wesentlichen coaxial zu dem Gehäuse (F) ist.

17. Apparat gemäss Anspruch 16, gekennzeichnet durch eine Elektrode H, welche das Innere des Einsatzes G durchquert, in einer Richtung die wesentlich parallel zur Längsachse des Gehäuses F ist.

18. Apparat gemäss Anspruch 16 oder Anspruch 17, gekennzeichnet durch eine Elektrode (H), wesentlich coaxial zum Gehäuse (F) und zum Einsatz (G), und dadurch, dass das Material (K) wesentlich ganz den Einsatz (G) um die Elektrode (H) ausfüllt und aus einer Mehrzahl von eletrisch leitenden separaten Teilen besteht.

19. Apparat gemäss Anspruch 18, dadurch gekennzeichnet, dass die Teile (K) unregelmässig geformte metallische Körner sind.

20. Apparat gemäss Anspruch 19, dadurch gekennzeichnet, dass jeweils der Einlass und der Abfluss (49) einen durchlöcherten Schirm aufweisen, der die Elektrode (H) in Position in dem Einsatz (G) stützt und die Körner (K) in dem Einsatz (G) hält.

21. Apparat gemäss Anspruch 10, dadurch gekennzeichnet, dass der Einsatz (G) und die Elektrode (H) mit jeweiligen Elektroden (48, 47) verbunden sind, die dazu angepasst sind, um mit einer elektrischen Schaltung ausserhalb des Gehäuses verbunden zu werden.

22. Apparat gemäss Anspruch 14 oder Anspruch 21, dadurch gekennzeichnet, dass die elektrische Schaltung dazu angepasst ist, eine Hochfrequenz-Wechselspannung im Bereich zwischen 100 Hz und 100 MHz zu erzeugen.

23. Apparat gemäss Anspruch 14 oder Anspruch 21, dadurch gekennzeichnet, dass die elektrische Schaltung dazu angopasst ist, eine pulsierte Gleichhochspannung zu erzeugen.

24. Apparat gemäss Anspruch 22 oder Anspruch 23, dadurch gekennzeichnet, dass die Spannung zwischen 500 und 50.000 V liegt.

**Revendications**

1. Méthode de traitement de gaz pour en éliminer des contaminants gazeux, comprenant les étapes :

    a) soumettre un gaz à une tension électrique continue élevée, suffisante pour déstabiliser le gaz;

    b) ioniser le gaz; et

    c) appliquer un champ électrique de tension élevée à haute fréquence alternative ou continue pulsée, au gaz, de façon à convertir les constituants ayant une structure moléculaire relativement complexe en une structure plus simple.

2. Appareil (1, 100) pour mettre en oeuvre la méthode de la revendication 1, comprenant un premier dispositif (B, B1) pour soumettre le gaz à une tension électrique continue suffisante pour déstabiliser le gaz, un deuxième dispositif (C, C1) pour ioniser le gaz, en aval du premier dispositif (B, B1), et, en aval du deuxème dispositif (C, C1), un troisième dispositif (D, D1) agencé pour appliquer un champ de force électrique pulsée au gaz.

3. Appareil selon la revendication 2, caractérisé en ce que les dispositifs (B, B1, C, C1, D, D1) sont logés dans un logement tubulaire (A, F), possédant une entrée (10) pour le gaz en amont du dispositif (B, B1) et une sortie (11) pour le gaz, en aval du dispositif (D, D1).

4. Appareil selon la revendication 2, caractérisé en ce que les entrée (10) et sortie (11) sont respectivement adaptées pour être connectées à une conduite dans laquelle le gaz s'écoule pendant l'utilisation.

5. Appareil selon la revendication 2, caractérisé en ce que l'entrée (10) est adaptée pour être connectée à une conduite dans laquelle le gaz s'écoule pendant l'utilisation.

6. Appareil selon les revendications 2 à 5, caractérisé par des moyens (E) pour ajouter de l'air ou de l'oxygène au gaz.

7. Appareil selon la revendication 6, caractérisé par des moyens (E) comprenant un tuyau dépassant de la paroi du logement (A, F).

8. Appareil selon l'une quelconque des revendications 2 à 7, cactérisé en ce que le dispositif (C, C1) comprend une grille (19) d'éléments (21) électriques allongés, espacés et substantiellement parallèles, s'étendant dans une direction transversale par rapport à l'axe longitudinal du logement (A, F).

9. Appareil selon la revendication 8, caractérisé par des éléments (19) comprenant des fils montés dans un support (20) électriquement conducteur, inséré dans le logement (A, F) et isolé électriquement de celui-ci par des moyens d'isolation (22) de telle sorte que les fils (19) s'étendent substantiellement sur la section interne transvesale du logement (A, F), et par une connexion électrique (24) à une source électrique extérieure au logement (A, F).

10. Appareil selon la revendication 9, caractérisé en ce que le support (20) comprend deux bandes métalliques espacées entre lesquelles s'étendent les fils.

11. Appareil selon l'une quelconque des revendications 7 à 10, caractérisé en ce que le dispositif (D) comprend une pluralité d'éléments (25) plats, électriquement conducteurs, espacés les uns des autres, montés de telle manière à se trouver en des plans substantiellement parallèles à l'axe longitudinal du logement (A).

12. Appareil selon la revendication 11, caractérisé en ce que les éléments plats (25) sont substantiellement plans.

13. Appareil selon l'une des revendications 11 ou 12, caractérisé en ce que les éléments (25) plats, adjacents, sont espacés par des espaces (26) électriquement isolés, de telle sorte que les espaces entre chaque paire d'éléments plats sont substantiellement identiques.

14. Appareil selon la revendication 13, caractérisé en ce que des éléments (25) plats sont alternativement connectés électriquement avec un conducteur (27, 28) électrique commun, de façon à créer deux séries de plaques, et en ce que chaque conducteur (27, 28) est adapté en (31, 32) pour être connecté avec un circuit électrique du logement.

15. Appareil selon l'une quelconque des revendications 7 à 10, caractérisé en ce que le dispositif (D1) comprend un insert (G) dans le logement (F), avec des moyens (41) pour isoler l'insert (G) électriquement du logement (F), l'insert (G) contenant un matériau électriquement conducteur (K) et possédant une entrée et une sortie (49) respectives pour les gaz.

11

**16.** Appareil selon la revendication 15, caractérisé en en ce que l'insert (G) comprend un tube électriquement conducteur substantiellement coaxial au logement (F).

**17.** Appareil selon la revendication 16, caractérisé par une électrode H passant à l'intérieur de l'insert (G), dans une direction substantiellement parallèle à l'axe longitudinal du logement (F).

**18.** Appareil selon l'une des revendications 16 ou 17, caractérisé par une électrode (H) coaxiale avec le logement (F) et l'insert (G), et en ce que le matériau (K) remplit substantiellement entièrement l'insert (G) entourant l'électrode (H) et comprend une pluralité de pièces électriquement conductrices séparées.

**19.** Appareil selon la revendication 18, caractérisé en ce que les pièces (K) sont des granulés métalliques de formes irrégulières.

**20.** Appareil selon la revendication 19, caractérisé en ce que respectivement l'entree et la sortie (49) comprennent un écran perforé supportant l'électrode (H) en position dans l'insert (G) et maintiennent les granulés (K) dans l'insert (G).

**21.** Appareil selon la revendication 10, caractérisé en ce que l'insert (G) et l'électrode (H) sont connectés à des électrodes (48, 47) respectives adaptées pour être connectées avec un circuit extérieur au logement.

**22.** Appareil selon l'une des revendications 14 ou 21, caractérisé en ce que le circuit électrique est capable de générer une tension alternative haute fréquence entre 100 Hz et 100 MHz.

**23.** Appareil selon l'une des revendications 14 ou 21, caractérisé en ce que le circuit électrique est capable de générer une tension continue pulsée élevée.

**24.** Appareil selon l'une des revendications 22 ou 23, caractérisé en ce que la tension est comprise entre 500 et 50.000 V.

FIG.1

FIG.2

FIG.3

FIG.4

FIG.5

EP 0 489 073 B1